# EUROPEAN PATENT SPECIFICATION

(11) **EP 4 198 968 B1**
(45) Date of publication and mention of the grant of the patent: **09.07.2025**
(21) Application number: 21306837.2
(22) Date of filing: 17.12.2021
(51) Int. Cl.: G10L 15/193, G06F 40/253, G06F 40/205

(54) **AUTOMATIC TRANSCRIPTION OF GRAMMARS FOR THE DEVELOPMENT OF AUTOMATIC SPEECH RECOGNITION ENGINES**
AUTOMATISCHE TRANSKRIPTION VON GRAMMATIKEN FÜR DIE ENTWICKLUNG VON AUTOMATISCHEN SPRACHERKENNUNGSMASCHINEN
TRANSCRIPTION AUTOMATIQUE DE GRAMMAIRES POUR LE DÉVELOPPEMENT DE MOTEURS DE RECONNAISSANCE VOCALE AUTOMATIQUE

(43) Date of publication of application: 21.06.2023
(73) Proprietor: Vivoka, 57070 Metz (FR)
(72) Inventor: LEROY, Vincent, 57070 METZ (FR); REBISCHUNG, Robin, 57070 METZ (FR)
(74) Representative: Atout PI Laplace

(56) References cited:
- US-A- 5 475 588
- BETKOWSKA CAVALCANTE AGNIESZKA ET AL: "Robust Speech Recognition in the Car Environment", 6 November 2009, ADVANCES IN BIOMETRICS : INTERNATIONAL CONFERENCE, ICB 2007, SEOUL, KOREA, AUGUST 27 - 29, 2007 ; PROCEEDINGS; [LECTURE NOTES IN COMPUTER SCIENCE; LECT.NOTES COMPUTER], SPRINGER, BERLIN, HEIDELBERG, PAGE(S) 24 - 34, ISBN: 978-3-540-74549-5, XP047432244
- WESLEY HOLLAND ET AL: "A Unified Language Model Architecture for Web-based Speech Recognition Grammars", SIGNAL PROCESSING AND INFORMATION TECHNOLOGY, 2006 IEEE INTERNATIONAL SYMPOSIUM ON, IEEE, PI, 1 August 2006 (2006-08-01), pages 294 - 299, XP031002442, ISBN: 978-0-7803-9753-8

## Description

### FIELD OF THE INVENTION

The present invention relates to the field of Automatic Speech Recognition (ASR). More specifically, it relates to the field of the development of the grammars of ASR engines, and their adaptation to different ASR engines.

### BACKGROUND PRIOR ART

Automatic Speech Recognition (ASR) relates to the automatic recognition of speech by computers. ASR solutions consist in recording a speech from a user using a microphone, then analyzing the recorded audio waves to identify the speech that was uttered by the user. The output of an ASR engine is usually a series of words and sentences corresponding to an understanding of the speech uttered by the user.

An ASR engine generally operates in several steps. First the recorded audio waves are converted into phonemes, then a dictionary is used to convert the phonemes into words, and finally the series of words are converted into sentences.

In the latter operation, the ASR uses a speech recognition grammar (that will be, for the sake of simplicity, simply be called "grammar" in the remaining of the disclosure). A grammar is a set of rules and word patterns that define which words and sentences can be understood by an ASR. The primary goal of a grammar is to ensure that the series of words and sentences understood by the ASR are syntactically and semantically correct.

Exemplarily US 5,475,588 A discusses the use and conversion of grammars for interpretation of natural human languages on a computer.

Some ASRs are based on a corpus of words, associated with probabilities of appearance of words in a language, including probabilities of appearance conditional upon the preceding word(s). In other cases, the ASRs can be based on a grammar. In such cases, when configuring the ASR, a user is therefore requested to define a grammar that defines what can be understood by the ASR. The grammar can be defined using a grammar format. For example, the Speech Recognition Grammar Specification (SGRC) is a widely used standard edited by the World Wide Web Consortium (W3C) defining how grammars can be specified. Grammars that comply with the SGRC standard may be written in a Extensible Markup Language (XML) or Backus-Naur Form (BNF) language. When writing a grammar, a user usually writes a text file that is transformed into a XML or BNF file.

Each ASR engine uses its own grammar format. Indeed, even if two different ASR engines use two formats that comply with a same standard such as the SGRC standard, they may implement different functionalities of the standard and express the grammar in a different language.

When defining a grammar, a user usually writes a grammar. In a grammar language, that usually corresponds to a grammar language that he is used to implement and/or an ASR engine that he intends to use. However, the user may be interested to use the same grammar rules in a second ASR engine and/or test the outputs produced by different engines for the same grammar rules. However, some functionalities of the grammar that he used may not be allowed by the second ASR engine, so that the grammar cannot be used. Currently, each ASR engine uses its own grammar format, and the only option for the user is to completely rewrite its grammar for the second ASR engine.

This situation is not convenient for the users, and prevents in practice the use of different ASR engines. The performances of the ASR are also reduced, because it is not possible to select the ASR engine which is the best suited in a given context to use an input grammar.

There is therefore the need for a solution to configure different ASR engines using different grammar formats to use the same input grammar.

### SUMMARY OF THE INVENTION

To this effect, the invention discloses a computer-implemented method comprising: obtaining from a user an input automatic speech recognition (ASR) grammar in an input format of ASR grammars; obtaining a selection of an ASR engine using ASR grammars in an output format of ASR grammars, different from the input format; parsing said ASR grammar into an input tree, each node of the tree representing an expression, keyword, directive, statement or syntax element; performing a conversion of the input tree into an output tree, said conversion comprising replacing nodes representing expression, keyword, directive, statement, or syntax elements that are not allowed by the output format by an equivalent set of expression, keyword, directive, statement or syntax elements allowed by the output format; converting said output tree into an output ASR grammar; compiling (560) said output ASR grammar for said ASR engine.

Advantageously, said selection of the ASR engine is performed by the user.

Advantageously, said conversion comprises performing a traversal of the input tree, and, each time is found during a traversal a node that represents a keyword, directive, statement or syntax element to convert, replacing said node.

Advantageously, the input tree comprises a pronunciation statement applicable to each node representing a defined word; said pronunciation statement is not allowed by the output format; said conversion comprises replacing in the output tree said pronunciation statement by a pronunciation directive duplicated for each node representing said defined word.

Advantageously, the input tree comprises a repetition node representing a keyword to detect a number of successive occurrences of an expression defined by a parameter subtree of said repetition node; said keyword to detect a number of successive occurrences is not allowed by the output format; said conversion comprises replacing said repetition node by duplications of said parameter subtree for said number of successive occurrences.

Advantageously, said number of successive occurrences is comprised between a minimum number and a maximum number of successive occurrences; the output tree comprises said maximum number of duplications, among which a number of duplications equal to the difference between the maximum number and the minimum number are indicated as optional.

Advantageously, the input tree comprises a plurality of nodes representative of a start rule; said conversion comprises replacing said plurality of nodes by a single node representative of a start rule, having, for each start node of plurality of nodes representative of a start rule, a child representing the same rule as said start node.

Advantageously, the computer-implemented method further comprises using said ASR engine.

The invention also discloses a computing system comprising at least one processing logic configured to execute a method according to any one of the preceding methods.

The invention also discloses a computer program product comprising computer code instructions which, when the program is executed by a computer, cause the computer to carry out the steps of the method of one of the embodiments of the invention.

### BRIEF DESCRIPTION OF THE DRAWINGS

The invention will be better understood and its various features and advantages will emerge from the following description of a number of exemplary embodiments provided for illustration purposes only and its appended figures in which:
- Figure 1 represents a voice assistant for the development of which the invention can be implemented;
- Figure 2 represents an Automatic Speech Recognition (ASR) engine for the development of which the invention can be implemented;
- Figure 3 represents an example of a computing system in a number of embodiments of the invention;
- Figure 4 represents an example of an interface to edit ASR grammars in a number of embodiments of the invention;
- Figure 5 represents a computer-implemented method in a number of embodiments of the invention;
- Figures 6a, 6b and 6c represent respectively an example of an input tree, a subtree of said input tree, and an output tree in a number of embodiments of the invention.

### DETAILED DESCRIPTION OF THE INVENTION

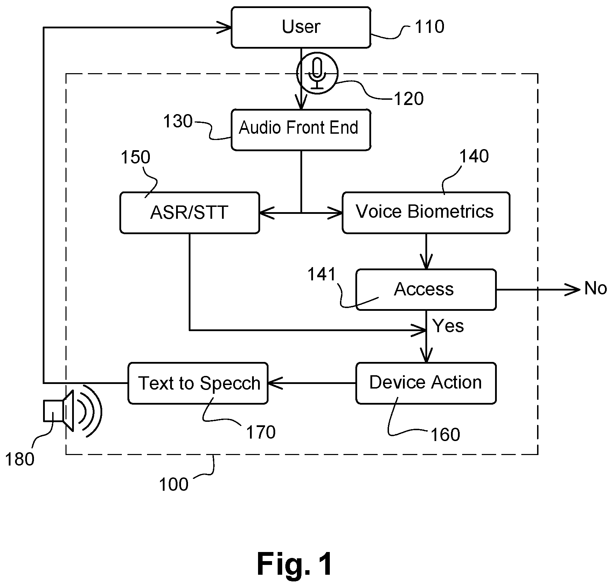

Figure 1 represents a voice assistant in which the invention can be implemented.

A voice assistant aims at interacting with a user to help this user perform actions through speech. To this effect, a voice assistant may use software and/or hardware components running on one or more computing platforms to listen to the speech uttered by a user, perform actions accordingly, and, if needed, respond through speech to the user. Responding to speech to the user for example allows asking questions to resolve certain ambiguities, ask further details to the user, etc.

In the example of figure 1, the voice assistant 100 is formed of a plurality of modules.

A digital microphone 120 records the audio waves emitted by the speech of a user 110. The recorded waves are first processed by an audio front end module 130 which performs audio processing in order to improve the ability of the ASR 100 to use the audio to perform speech recognition. The audio front end module 130 may enhance the digital audio, for example by performing audio denoising, equalization, etc.

The voice assistant 100 may also comprise a voice biometrics module 140 that performs biometrics detection on the user voice (for example, the voice biometric module is able to determine if the voice which is hear belongs to a known/trusted user or not) and an access module 141 that may grant or not the access to action functionalities based on the voice biometrics detection. For example, the ability to perform certain actions, or even simply use the voice assistant may be restricted to a specific list of trusted users.

The voice assistant 100 also comprises an Automatic Speech Recognition (ASR) module 150, also called Speech To Text (STT) module. The ASR module interprets the audio waves (in the example of figure 1, the enhanced audio waves at the output of the audio front end module 130) and transforms them into a series of words and sentences.

Upon the detection of specific sentences, a device action module 160 can trigger the execution of specific action. For example, if the voice assistant 100 is implemented within a mobile phone and the device action module 160 detects the sentence *"call Jonathan",* the mobile phone can be configured to cause the mobile phone to call the contact called *"Jonathan".*

In certain cases, the device action consists in saying a speech to the user. For example, if the mobile phone is not aware of any contact called *"Jonathan",* the device action may consist in saying to the user *"The contact Jonathan is not known. Please repeat the name please".* To this effect, the voice assistant 100 further comprises a Text To Speech (TTS) module 170. The TTS module is configured to convert the sentence into an audio signal, and cause loudspeakers 180 to convert the audio signal into sound to be heard by the user.

Therefore, the voice assistant 100 provides a complete solution to listen to the audio inputs of a user, cause the execution of the corresponding actions, and provide the user with an interactive experience by providing an audio feedback.

The modules of the voice assistant may be executed in one or more computing devices. For example, the whole voice assistant may be executed in a user computing device such as a smartphone, tablet, personal computer, etc. Alternatively, some of the modules may be executed remotely on servers. For example, the audio front end module 130 may be executed on a user device comprising the microphone 120 and the loudspeakers 180, and the other modules may be executed remotely on one or more servers.

The present invention relates to the development of an ASR module such as the ASR module 150. The present invention is applicable to ASRs to be used in voice assistants, but also in any other applications. ASRs are used in a large number of applications, such as voice control, video games, robotics, home automation, etc.

The applicant has developed a development kit to develop voice assistants called Voice Development Kit (VDK). The invention can be implemented within such development kit for voice assistant, but also in any development suite which is able to develop, configure, or manage ASR engines.

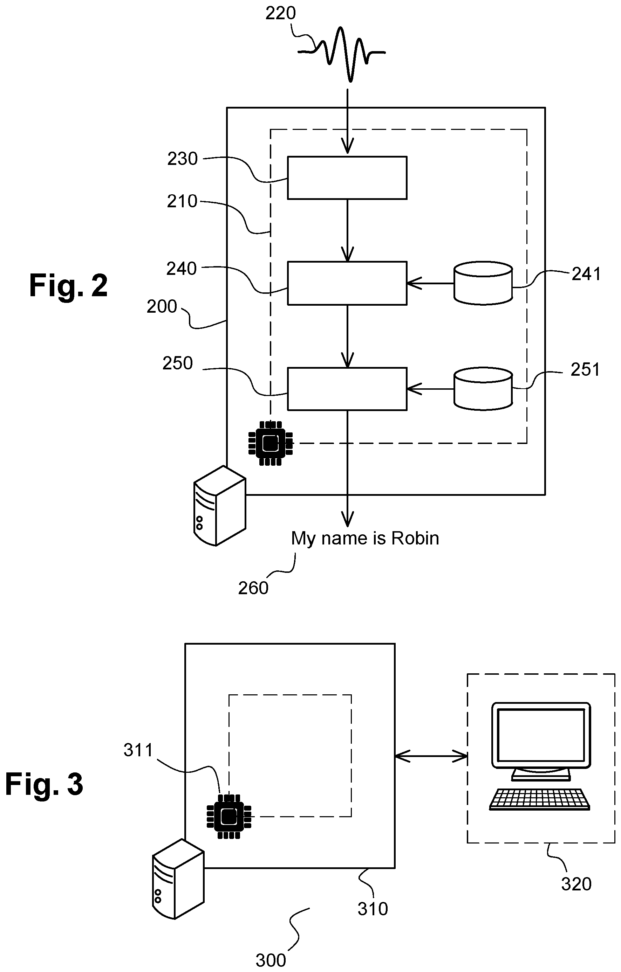

Figure 2 represents an Automatic Speech Recognition (ASR) engine for the development of which the invention can be implemented.

The ASR engine is intended to be executed on a computing device 200, which may be for example a user personal computing device, or a server. The device 200 comprises at least one processing logic 210. According to various embodiments of the invention, a processing logic may be a processor operating in accordance with software instructions, a hardware configuration of a processor, or a combination thereof. It should be understood that any or all of the functions discussed herein may be implemented in a pure hardware implementation and/or by a processor operating in accordance with software instructions. It should also be understood that any or all software instructions may be stored in a non-transitory computer-readable medium. For the sake of simplicity, in the remaining of the disclosure the one or more processing logic will be called *"the processing logic".* However, it should be noted that the operations of the invention may also be performed in a single processing logic, or a plurality of processing logics, for example a plurality of processors. Even if a single computing device is represented in figure 2, the ASR engine could also be executed by distributed calculation on a plurality of processors in a plurality of different computing devices.

The processing logic 210 is configured to execute a plurality of modules 230, 240 and 250 of the ASR engine. The modules may be of different natures depending upon how the ASR engine is to be executed and the kind of processing logic. For example, the modules 230, 240 and 250 may be software modules.

The ASR engine is configured to receive as input a digital audio input 220. The digital audio input typically comprises user speech, and may take many different formats. For example, it may be streamed live, or stored in a digital file. It may be either formed of raw audio input, for example in the form of a PCM (Pulse Code Modulation) file, or a compressed audio input, for example audio compressed in the MP3 format. The digital audio input 220 may be formed of different numbers of channels, may have different bit depths, etc.

A first module 230 of acoustic model transforms the audio input 220 into a series of phonemes. Then, a second module 240 uses a dictionary of words 241 to translate the series of phonemes into a series of words. The dictionary 241 may for example comprise words of a defined language, including widely used proper nouns. The dictionary 241 may also contain words specific to a defined application of the ASR. For example, if the ASR is to be embedded within an application to control an automotive vehicle, the dictionary may comprise words dedicated to the control of vehicles.

Then, a third module 250 uses a grammar 251 to translate the series of words at the output of the second module 240 into sentences. The grammar 251 represents rules of associations of words into sentences that allow forming meaningful sentences. The possible rules and possibilities of expressing rules will be described in greater details in the remaining of this disclosure.

The grammar 251 may be represented in different ways. For example, it may be stored in a digital file, for example in an Extensible Markup Language (XML) or Backus-Naur Form (BNF) language that is loaded by the third module 250. Alternatively, the grammar may be directly embedded within the third module 250 upon the creation (for example the compilation) of the ASR. The grammar can be compiled as a graph of probability of a series of words which is loaded at the launch of the ASR.

During the execution of the ASR, the third module 250 is configured to create sentences when the series of words at the output of the module 240 comply with the rules expressed by the grammar 251. These sentences are then output 260, as in the example of figure 2 the sentence "My name is Robin".

The ASR of figure 2 is provided by means of example only of ASR for the development of which the invention can be implemented. The invention can more generally be used for the development of any ASR that uses grammars.

Figure 3 represents an example of a computing system in a number of embodiments of the invention.

As will be explained in more details below, one objective of a computing system according to the invention is to allow a user to edit ASR grammars, and configure an ASR engine to use the grammar, even if the ASR engine does not natively implement all the syntax, keyword or directive elements of the ASR grammar as edited by the user.

To this effect, in the example of figure 3, the computing system 300 comprises a single computing device 310 that comprises at least one computing logic 310. In other embodiments of the invention, the computing system 300 may comprise a plurality of communicating computing devices comprising a plurality of computing logics for performing distributed calculations. For the sake of simplicity, in the remaining of the disclosure the at least one processing logic 310 will be called "the processing logic". However, it should be noted that the operations of the invention may also be performed in a single processing logic, or a plurality of processing logics, for example a plurality of processors. In case a plurality of processing logics are used, they may be either located on a single device, or distributed across a plurality of communicating computing devices.

The computing system 300 further comprises input and output interfaces that allow interfacing with the computing device 310. These interfaces may include any interface that is usable to interact with a computer such as a keyboard, mouse, tactile pad, a microphone coupled to voice command software, a screen, etc.

More generally, the computing system 300 may be any system that possesses interfacing, editing and computing capabilities so that a user can edit an ASR grammar, and configure an ASR engine to use the grammar.

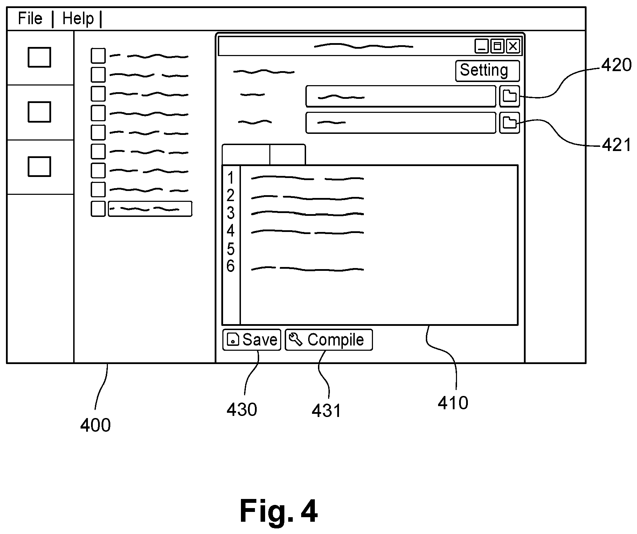

The figure 4 represents an example of an interface to edit ASR grammars in a number of embodiments of the invention.

The interface 400 may be for example an interface of a development tool for the development of ASR, or voice assistant provided to a user by the computing system 300.

The interface 400 comprises a text editing window 410 wherein the user can write grammar rules. The grammar rules use specific expressions that define what sentences and expressions can be understood by the grammar.

The folder sections 420 and 421 respectively allow selecting an input file (in this example "test.bnf" that may start as an input point to write the grammar, and an output directory wherein the compiled ASR will be found.

The "save" button 430, and "compile" button 431 respectively allows saving the grammar in the input file, and compiling the ASR using the written grammar.

When compiling the ASR, the grammar can be compiled as a language model, for example in the form of a graph of probability of series of words that can be loaded at the execution of the ASR.

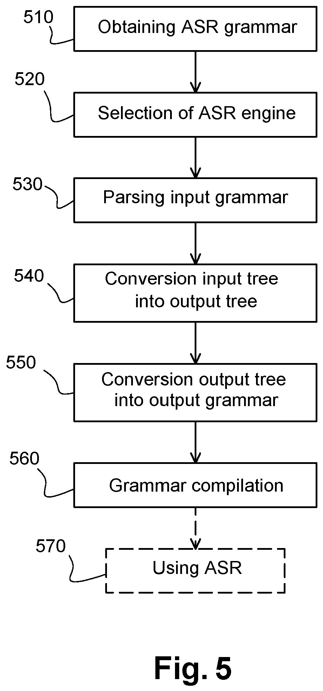

The figure 5 represents a computer-implemented method in a number of embodiments of the invention.

The method 500 is a computer-implemented method that can be executed for example by the system 300.

The method 500 comprises a first step 510 of obtaining from a user an input automatic speech recognition (ASR) grammar in an input format of ASR grammars.

The input ASR grammar, that can be simply called "input grammar", can be obtained in a number of different ways. For example, written by the user, loaded from an input digital file (for example an XML or BNF file), or loaded then modified by the user. All these operations can for example be performed by the user in the interface 400.

The input grammar is expressed in an input format, which defines which expressions and syntax elements can be used, and what their meaning is. In the field of ASR grammar, an "expression" defines a series of words that can be recognized by the grammar. For example, an expression can represent a word, or a set of words. Meanwhile, syntax, keyword or directive elements define how the expressions can be combined. For example, they define possible alternatives for a given expression, that an expression can be repeated, etc. More specifically, a directive is a unitary function that simplifies the writing of a grammar and applies to a given expression (for example *"!repeat"* to detect the repetition of an expression" *!pronounce"* to define the pronunciation of an expression); a statement is a directive that applies for a whole grammar (for example, a "!pronounce" statement may define the pronunciation of any instance of an expression in the grammar, while a "!pronounce" directive applies to a single expression).The expressions and other syntax/keyword/directive elements can be combined to define complex rules that define all the sentences that the user may be willing to detect.

The input format may belong to different input formats that allow different keywords and syntax expressions.

By means of example, if one is willing to write a rule that detects that the user repeated the word *"hello"* between 2 and 5 times (i.e the detection of any of the series of words *"hello hello", "hello hello hello", "hello hello hello hello",* or *"hello hello hello hello hello":*
- in some grammars, a keyword allows the detection of the repetition of the same expression. For example, in some grammars, the statement *!repeat(hello, 2, 5)* detects any of the above series of words. The parameter of the *"repeat"* keyword being the following:
   - first parameter (hello): expression whose repetition is detected;
   - second parameter (2): minimal number of repetitions;
   - third parameter (5): maximal number of repetitions.
- in other grammars, the *"repeat"* keyword is not allowed, but optional expressions can be written in brackets. Therefore, the same rule may be expressed as *"hello hello [hello] [hello] [hello]".* In yet other grammars, the same principle is used, but with other syntax elements than brackets. For example, the same rule may be expressed by adding a "?" after each optional expression. The grammar rule then becomes: *"hello hello hello? hello? hello?".*

This is of course only one example of functionality that is not implemented in all grammar languages. Other such functionalities may be found. For example:
- In some grammar formats, multiple start rules can be defined. A grammar file can therefore comprise two start rules, for example, the directive "!start" indicating a start rule:
   *!start <start_rule_1>;*
   *!start <start_rule_2>;*
- While other grammar formats may not allow such alternative start rules. In this case a single start rule may be defined as an "OR" alternative between two start rules:
   *!start <__generated_start_rule>;*
   *<__generated_start_rule>: <start_rule_1>* | *<start_rule_2>.*

The input format can be chosen according to many different reasons. It may for example be a format the user is familiar with, a default format of the grammar editor, the format that is expected as input of a defined ASR engine, etc.

However, in some instances, the user may wish to use a grammar with a different ASR engine that does not comply with the input format. For example, an interface such as the interface 400 may include input means for allowing a user to select an ASR engine. It is especially beneficial for a user to be able to use different ASR engine, for example for performing tests, or to benefit from different capabilities of ASR engines (i.e. different acoustical models, dictionaries, etc) and/or of ASR engines that provide the best performances in a given context.

In such cases, the method 500 comprises a second step 520 of obtaining a selection of an ASR engine using ASR grammars in an output format of ASR grammars, different from the input format.

As noted above the selection of the ASR engine may occur in many different ways.

For example, the ASR engine can be obtained automatically. In a number of embodiments of the invention, the method 500 is repeated for a plurality of different ASR engines, in order to use the grammar in a plurality of different engines.

In a number of embodiments of the invention, said selection of the ASR engine is performed by the user.

The user may select the ASR engine in different ways. For example, this selection may be performed in a user interface such as the interface 400, for example by selecting the desired ASR engine in a list.

This allows the user to define the ASR engine that he/she is intending to use.

When the output format of ASR grammar (that will simply referred to as "output format" in the remaining of the disclosure, by means of simplicity) used by the selected ASR engine is different from the input format (i.e. Uses different syntaxes, keywords, etc), the grammar obtained at step 510 cannot be used directly within the selected ASR engine.

One solution would be that the user re-writes the grammar, but this approach is not convenient for a number of reasons. First, the user is not necessarily an expert in ASR grammars, and is not necessarily aware of all the grammar formats. Secondly, this may be an extremely long procedure, especially if the grammar is complex, and if the user is willing to use the grammar for more than two different ASR engines.

One of the aims of the invention is to allow the user to use any ASR engine, even if it complies with a grammar format different from the format in which the input ASR grammar has been written.

To this effect, the method 500 comprises a third step 530 of parsing the ASR grammar into an input tree, each node of the tree representing an expression, keyword or a syntax element.

This tree representation highlights the hierarchical structure of grammars, and allows an easier modification of the grammar, because each node can be modified. In addition, whole subtrees can be manipulated.

The parsing at step 530 transcripts a grammar written in the form of sentences such as the grammar 600a into a tree.

The invention will now be exemplified by an example of a conversion of an input grammar in an input grammar format into an output grammar in an output grammar format, different from the input grammar format.

The input grammar is the following:

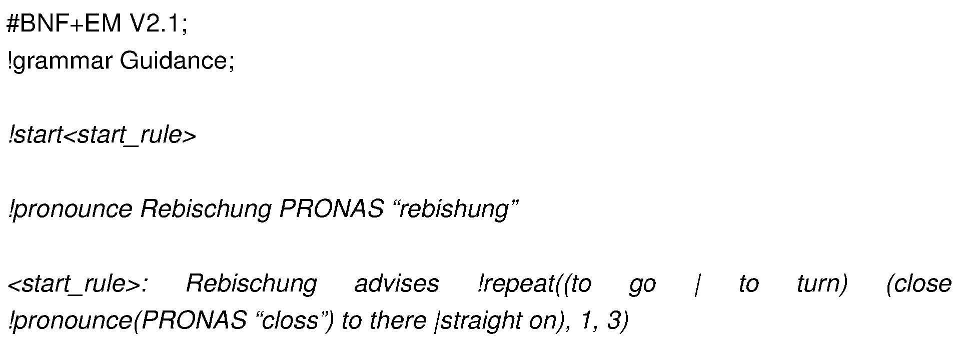

This grammar is an example of a grammar that may be obtained at step 510, and comprises a plurality of different elements. This grammar, as well as the successive tree transformations and modifications, is provided by means of example only of an input grammar in a number of embodiments of the invention, in order to provide a concrete illustration of the operations carried out by the invention.

The line:
*!start<start_rule>*
indicates that the starting point of the grammar is the rule called *"start_rule".*

The line:
*!pronounce Rebischung PRONAS "rebishung"*
indicates the name *"Rebischung"* is pronounced *"rebishung".* This allows interpreting a word spelled "Rebischung" at the output of the acoustic model as *"rebishung".* This feature is useful when proper names whose writing and spelling are not consistent are used, or for disambiguating homographs.

The line:
*<start_rule>: Rebischung advises !repeat((to go* / *to turn) (close !pronounce(PRONAS "closs") to there* /*straight on), 1, 3)*
defines the rule called "start_rule".

This rule is formed of different parts.

*"! repeat(..., 1, 3)"* means that the first argument under the *"repeat"* statement can be repeated between 1 and 3 times.

The expression *(to go* / *to turn)* represents the presence of one of the two alternative expressions *"to go",* and *"to turn".*

The expression *"close !pronounce(PRONAS "closs")"* means that the term "close" is pronounced *"closs".* This is useful for disambiguating homographs that are pronounced in different ways. In this example, *"close"* is used as a synonym of *"near"* and is, in English, pronounced *"closs",* by opposition as the term *"close"* in the sense of the opposite of *"open"* which is pronounced *"cloz".* The keyword *"pronounce"* therefore ensures that the correct pronunciation is detected. In this example, the keyword *"pronounce"* applies to the single expression *"close",* and is therefore a directive.

The expression *"close !pronounce(PRONAS "closs") to there* /*straight on"* represents an alternative between *"close to there",* and *"straight on".* Therefore, this expression designates the presence of any of the above expressions: *"close to there"* (detected with the pronunciation "closs", or *"straight on".*

To summarize, the rule *"start_rule"* represents a rule of detection of one to three successive statements of one of the following alternatives:
- *"Rebishung advises to go close to there";*
- *"Rebishung advises to go straight on";*
- *"Rebishung advises to turn close to there";*
- *"Rebishung advises to turn straight on".*

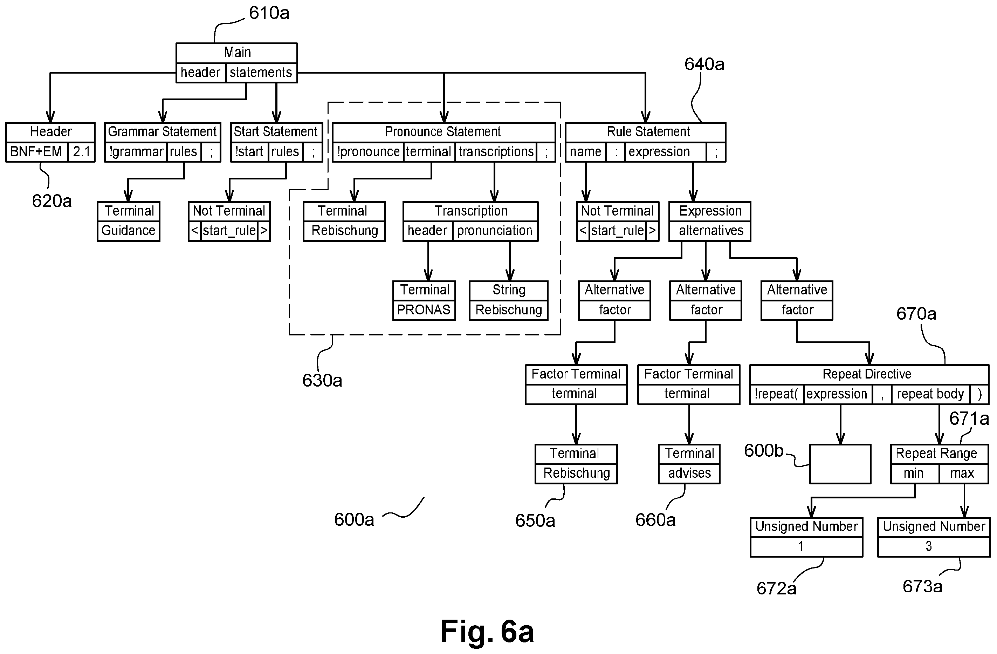

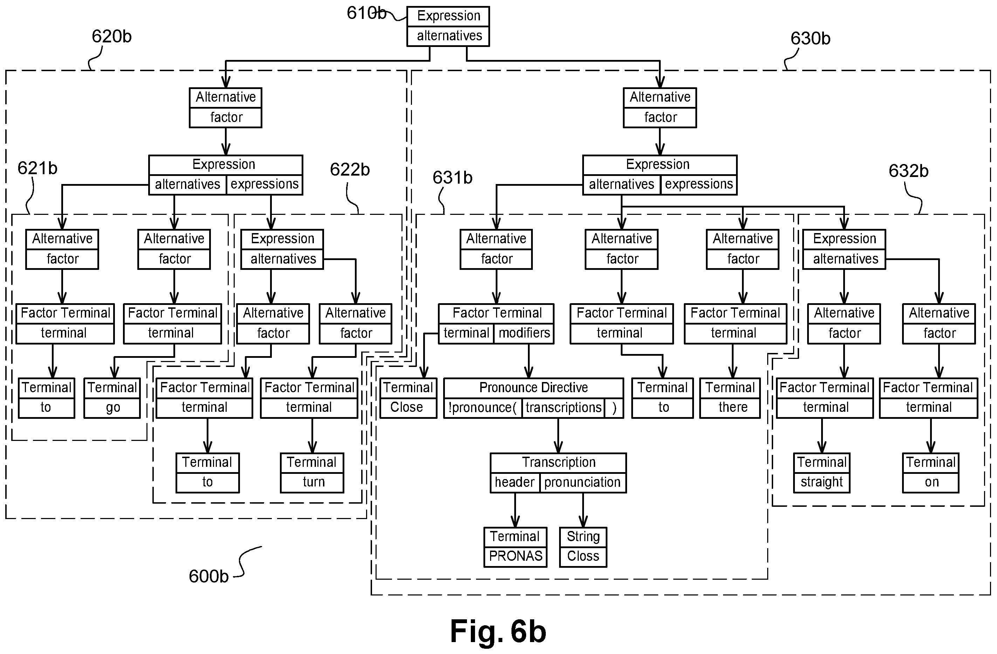

The figures 6a and 6b represent respectively an example of an input tree, and a subtree of said input tree in a number of embodiments of the invention.

As noted above, the third step 530 of the method consists in parsing the input grammar into an input tree. The figures 6a and 6b provide a concrete example of the parsing of the exemplary input grammar discussed above into a tree 600a. Of course, this tree and subtree are provided by means of non-limitative illustrative examples only of a parsing of a grammar into a tree.

A complete subtree 600b has been represented in figure 6b. However, this split of the representation in two figures is only intended to increase the intelligibility of the figures. The tree 600a actually comprises the whole content of the subtree 600b in place of the box 600b noted in the figure 6a.

The tree 600a comprises a plurality of nodes and subtrees. For example:
- The node 610a is the root node of the tree;
- The node 620a indicates the header of the grammar file ('in this example BNF 2:1);
- The subtree 630a represents the statement *!pronounce Rebischung PRONAS "rebishung"*;
- The node 640a, and its child node represent the rule *"start_rule".*

The expressions in the subtree of the nodes 640a are read in the depth first order, which means that the rule is defined, as in figure 6a by the expressions *"Rebischung"* (node 650a) *"advises"* (node 660a) then the expression defined by the node 670a and its children.

The node 670a *"Repeat directive"* represents the *"repeat"* statement of line 630a, and it child the parameters of the statement.

The subtree 600b represents the expression whose repetition is detected *"(to go* / *to turn) (close !pronounce(PRONAS "closs") to there* /*straight on)"* and will be examined in greater details with reference to figure 6b.

The node 671a and its two children indicate that the one of the expressions defined by the subtree 600b can be repeated between 1 and 3 times.

The figure 6b represents the subtree 600b. As noted above, the subtree is represented in a separate figure only to enhance the intelligibility of the disclosure. In the representation actually used during the execution of the example, the subtree 600b is fully integrated within the tree 600a.

As noted above, the subtree 600b represents the expression the expression *"(to go* / *to turn) (close !pronounce(PRONAS "closs") to there* /*straight on)"* that corresponds to any of the alternatives:
- *"to go close to there";*
- *"to go straight on ;*
- *"to turn close to there";*
- *"to turn straight on".*

The subtree 600b is thus formed of a root node 610b, and two subtrees:
- The subtree 620b, representing the expression *"(to go* / *to turn)"* defining the alternatives *"to go" (in* the subtree 621b) and *"to turn"* (in the subtree 622b);
- The subtree 630b, representing the expression *"close !pronounce(PRONAS "closs") to there* /*straight on"* defining the alternatives *"close to there"* (in the subtree 631b) and *"straight on"* (in the subtree 632b).

Coming back to figure 5, the method 500 further comprises a fourth step 540 of performing a conversion of the input tree into an output tree, said conversion comprising replacing nodes representing keyword, directive or syntax elements that are not allowed by the output format by an equivalent set of expression, keyword, directive or syntax elements allowed by the output format.

This step consists in replacing all nodes representatives of elements that are not allowed by the output format by equivalent elements that are allowed by the output format, so that the output tree can be converted into a grammar in the output format.

In a number of embodiments of the invention, the conversion comprises performing a traversal of the input tree, and, each time is found during a traversal a node that represents a keyword, directive or syntax element that is not allowed by the output format, replacing said node. The traversal can be for example of "depth-first" type, but any traversal of the input tree that allows visiting all the nodes can be used.

Stated otherwise, the input tree is traversed node by node and, each time a node representative of a directive, syntax element or keyword that is not allowed by the output format, this node is replaced by one or more nodes that have an equivalent meaning, but are accepted by the output format. An error can be raised if a replacement cannot be performed.

This allows ensuring that each element that is not allowed by the output format will be replaced by an equivalent element in a deterministic manner.

Some of the nodes, which correspond to keywords, statements or directives accepted by the output format, are left unchanged. For example, in the output tree 600c the root node 610c, header node 620c and rule statement node 640c are respectively identical to the corresponding nodes of the input tree 600a.

On the other hand, other nodes that correspond to keywords, statements or directives that are not accepted by the output format are converted into nodes representing keywords, statements or directives that are accepted by the output format.

Such nodes that are replaced often correspond to "complex" or "abstract" features, or features that apply to many different nodes, which are replaced by a higher number of simplest features.

For example, in a number of embodiments of the invention:
- the input tree comprises a pronunciation statement 630a applicable to each node representing a defined word 650a;
- said pronunciation statement is not allowed by the output format;
- the conversion comprises replacing in the output tree said pronunciation statement by a pronunciation directive 630c duplicated for each node representing said defined word 650c.

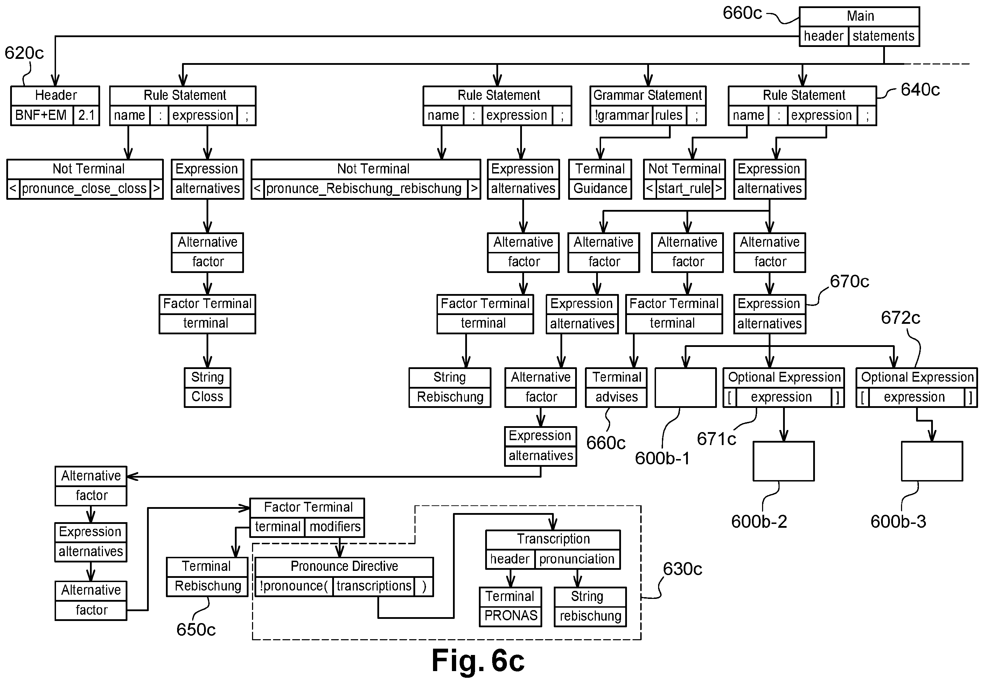

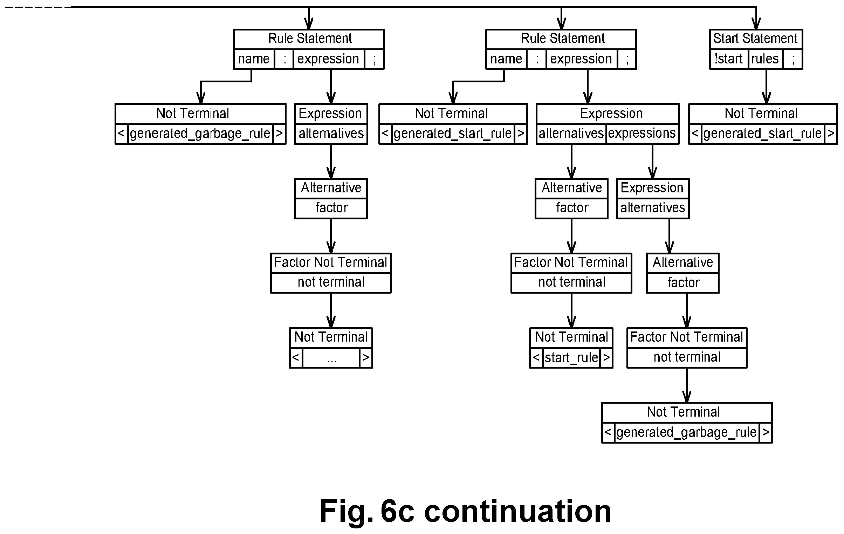

In the concrete example of figures 6a and 6c, the *"Pronounce statement"* 630a is a general statement that applies to each occurrence of the word "Rebischung", and states that this word is pronounced "rebishung". As this is a general statement, it applies to each node of the tree that comprises the expression "Rebischung", such as the node 650a.

As, in this example, the *"Pronounce statement"* is not allowed by the output format, it is replaced by a tree 630c comprising a *"Pronounce Directive"* that has the same effect of associating a pronunciation to a word, but applied only to a single node, in this case the node 650c.

In the example of figures 6a and 6c, there is a single occurrence of node with the expression *"Rebischung",* and thus a single *"Pronounce Directive"* 630c in the tree 600c. However, in more complex examples wherein a plurality of nodes with the expression *"Rebischung*" would be found, a plurality of *"pronounce directives"* would accordingly be inserted in the output node, for each of the nodes with the expression "*Rebischung*".

As will be explained in more details below with reference to the figure 6b, a "pronounce" directive is accordingly written in the output grammar for each occurrence of the expression *"Rebischung".*

It is therefore apparent that the use of the *"Pronounce statement"* allows an easier and more compact representation of the input tree, but also a more compact and efficient writing of the input grammar.

The conversion of a pronunciation statement applicable to each node representing a defined word into a plurality of pronunciation directives for each of said nodes when the pronunciation statement is not allowed by the output format therefore allows the user to write more compact input grammars that can still be used with virtually any ASR.

Moreover, grammars using pronounce statements can be used by virtually an ASR engine thanks to the conversion.

In some cases, the input grammar uses the directive "*repeat*", but the output format does not allow this directive.

In such cases:
- the input tree comprises a repetition node representing a keyword to detect a number of successive occurrences of an expression defined by a parameter subtree of said repetition node;
- said keyword to detect a number of successive occurrences is not allowed by the output format;
- the conversion comprises replacing said repetition node by duplications of said parameter subtree for said number of successive occurrences.

In the example of figures 6a to 6c, a repetition node 600a represents the directive "repeat" in the input tree 600a. Its parameters include the subtree 600b that represents the expression whose repetition is to be detected, and the node 671a and its sub-nodes that indicate that the expression can be repeated between 1 and 3 times.

As this *"repeat"* directive is not allowed by the output grammar format, this is replaced in the output tree 600c by a duplication of the subtree 600b into three identical subtrees 600b-1, 600b-1, 600b-3.

As the writing of a *"repeat"* directive is more compact than duplicating the expression whose repetition is tested, this allows a user to write more compact grammars. Furthermore, the input grammar comprising *"repeat"* directives can be used within virtually any ASR, even those that do not allow the *"repeat"* directive.

In a number of embodiments of the invention:
- said number of successive occurrences is comprised between a minimum number and a maximum number of successive occurrences;
- the output tree comprises said maximum number of duplications, among which a number of duplications equal to the difference between the maximum number and the minimum number are indicated as optional.

Stated otherwise, the number of successive occurrences of an expression defined by a *"repeat"* directive is not necessarily fixed, but can be comprised in a range of values between a minimum and a maximum value. In the example of figures 6a to 6c, the number of repetitions is comprised between a minimum number of 1 (node 672a in the input tree), and a maximum number of 3 (node 673a in the input tree). In order to express this in the output tree, the first duplication 600b-1 of the subtree 600b is mandatory, while the second and third duplications 600b-2 and 600b-3 are indicated as optional, through the use of *"Optional Expression"* nodes 671c and 672c.

This allows using in grammars directives for detecting the repetition of a variable number of successive instances of an expression, while being able to use the grammar even with ASRs that do not allow this directive or arguments.

In a number of embodiments of the invention, other transformations may be performed depending on the keywords and syntaxes allowed by the output grammar format.

In a number of embodiments of the invention, the input tree comprises a plurality of nodes representative of a start rule; said conversion comprises replacing said plurality of nodes by a single node representative of a start rule, having, for each start node of plurality of nodes representative of a start rule, a child representing the same rule as said start node.

For example, if the input grammar format has two start rules, but the output grammar format allows only a single start rule, the two start rules can be transformed in a single start rule using the syntax "|" meaning "or". Thus, the input grammar:
!start <start_rule_1>;
!start <start_rule_2>;
<start_rule_1>: ...;
<start_rule_2>: ...;

Would be transformed into:
   !start <__generated_start_rule>;
   <start_rule_1>: ...;
   <start_rule_2>: ...;
   <__generated_start_rule>: <start_rule_1> | <start_rule_2>;
Wherein the directive !start indicates the start rule.

The concrete example of figures 6a to 6c is of course provided by means of non limitative example only, and the invention could be applied with a large number of different directives and transformations. Furthermore, the different output grammars may implement none, some or all the keywords, syntax or directives of the input grammar. Accordingly, the conversion step may execute only a part of the possible conversion operations.

In a number of embodiments of the invention, the tree conversion isa adapted to the features of the output grammar format. For example, one output grammar may allow the "Pronounce" statements, but not the repeat directives. In such cases, the pronounce statement defined by the subtree 630a could be left unchanged in the output tree, but the repeat directive 670a and its parameter subtree 600b replaced by three duplications of the subtree 600b in the output tree as in the example of figure 6c.

In other embodiments of the invention, the tree conversion is performed the same way whatever the output grammar format, provided that the output tree uses only the simplest features, that are implemented by all the target output grammar formats.

Coming back to figure 5, the method 500 further comprises a fifth step 550 of converting the output tree into an output ASR grammar.

As explained above, at the output of the conversion step 540, the output tree comprises only nodes representative of expression, keyword, directive or syntax elements allowed by the output format; this operation can be performed by a program called *"visitor"* that would be adapted to the format of the output grammar. In particular, the conversion needs to comply with the hierarchy of the output nodes.

The application of the fifth step 550 to the output tree 600c results in the generation of the output grammar below:

```
 # This file has been automatically generated by Vivoka
 
 __pronounce_close_closs = ("closs");
 __pronounce_Rebischung_rebishung = ("rebishung");
 
 start_rule = (((($__pronounce_Rebischung_rebishung:Rebischung))) advises (((to go
 | (to turn)) (($_pronounce_close_closs:close) to there | (straight on))) ((to go | (to
 turn)) (($__pronounce_close_closs:close) to there | (straight on)))? ((to go | (to turn))
 (($_pronounce_close_closs:close) to there | (straight on)))?));
 __generated_start_rule = <s> ($start_rule) </s>.
```

It is apparent that the output grammar is much longer than the input grammar. This is mainly due to the fact that the expression *"!repeat((to go* / *to turn) (close !pronounce(PRONAS "closs") to there* /*straight on), 1,* 3)" has been replaced by the equivalent expression *((to go* / *to turn) (($__pronounce_close_closs:close) to there* /*straight on)) ((to go* / *to turn) (($__pronounce_close_closs:close) to there* /*straight on))? ((to go* / *to turn) (($__pronounce_close_closs:close) to there* /*straight on))* ? which is formed of three successive iterations of the repeated expression *((to go* / *to turn) (($__pronounce_close_closs:close) to there* /*straight on)),* the last two of which being followed by the sign "*?*" that indicates that the expression is optional, as required by the nodes 671c and 672c. Therefore, this long expression in the output grammar is strictly equivalent to the expression *"!repeat((to go* / *to turn) (close !pronounce(PRONAS "closs") to there* /*straight on), 1, 3)*'in the input grammar.

In addition, the *"Pronounce"* statement in the input grammar has been converted into a *"Pronounce"* directive which is applied directly to the word on which it applies, as written in the output grammar: $__pronounce_Rebishung_rebishung:Rebishung.

In this example, the output grammar is expressed in a grammar language used by the ASR engine called "TrulyNatural". This is however provided by means of example only, and the invention is applicable to virtually any output ASR grammar language.

Coming back to figure 5, the method 500 comprises a sixth step of compiling (560) said output ASR grammar for said ASR engine.

This step is typically performed by converting the text-written grammar 600b into a binary format that can be loaded by the ASR engine during its execution.

The method 500 provides a number of advantages.

Firstly, it allows an input grammar to be used with virtually any ASR engine, even if the ASR engine does not natively implement all the features of the input ASR grammar. This therefore allows the interoperability between the different ASR engines and ASR grammar formats.

The method also allows improving the performances of the ASRs. Indeed, each ASR engine is more or less suited for different use cases. Therefore, the ability to use the same input grammar for all the ASR engines allows selecting the ASR engine which provides the best performances in a given case.

Lastly, this eases the development of grammars for a user, because the user only needs to master a single grammar language to be able to write grammars for any ASR engine.

In a number of embodiments of the invention, the method 500 further comprises a seventh step 570 of using said ASR engine.

This step consists in using the ASR engine with a grammar as compiled at step 560. This may for example consist in sending the ASR engine to final users, loading the ASR engine on a computing system such as the system 200, and/or actually executing the ASR engine on a system such as the system 200.

As highlighted above, the previous steps of the method 500 allow using virtually any ASR engine for an input grammar, thereby allowing, for example, the use of the ASR engine that provides the best performances or allowing specific features. This therefore improves the use of ASR engines on computing systems such as the system 200.

The ASR using grammars generated using the invention may also be used for a number of other purposes. They may for example be used for applications that use different ASR engines in parallel, which comply with the same grammar. Using a plurality of different ASR engines allows for example to understand a plurality of different languages that are handled by the plurality of engines respectively.

For example, they may be used for a robot, or a robotic arm, in order for the robot to be able to use a plurality of different ASRs, in order for the robot to be controlled in different languages.

The examples described above are given as non-limitative illustrations of embodiments of the invention. They do not in any way limit the scope of the invention which is defined by the following claims.

## Claims

1. A computer-implemented method (500) comprising:
- obtaining (510) from a user an input automatic speech recognition, ASR, grammar in an input format of ASR grammars;
- obtaining a selection (520) of an ASR engine using ASR grammars in an output format of ASR grammars, different from the input format;
- parsing (530) said ASR grammar into an input tree (600a), each node of the tree representing an expression, keyword, directive, statement or syntax element;
- performing a conversion (540) of the input tree into an output tree (600c), said conversion comprising replacing nodes representing expression, keyword, directive, statement, or syntax elements that are not allowed by the output format by an equivalent set of expression, keyword, directive, statement or syntax elements allowed by the output format;
- converting (550) said output tree into an output ASR grammar;
- compiling (560) said output ASR grammar for said ASR engine.

2. The computer-implemented method of claim 1, wherein said selection of the ASR engine is performed by the user.

3. The computer-implemented method of one of claims 1 or 2, wherein said conversion comprises performing a traversal of the input tree, and, each time is found during a traversal a node that represents a keyword, directive, statement or syntax element to convert, replacing said node.

4. The computer-implemented method of claim 3 wherein:
- the input tree comprises a pronunciation statement (630a) applicable to each node representing a defined word (650a);
- said pronunciation statement is not allowed by the output format;
- said conversion comprises replacing in the output tree said pronunciation statement by a pronunciation directive (630c) duplicated for each node representing said defined word (650c).

5. The computer-implemented method of claim 3, wherein:
- the input tree comprises a repetition node (670a) representing a keyword to detect a number of successive occurrences of an expression defined by a parameter subtree (600b) of said repetition node;
- said keyword to detect a number of successive occurrences is not allowed by the output format;
- said conversion comprises replacing said repetition node by duplications (600b-1, 600b-2, 600b-3) of said parameter subtree for said number of successive occurrences.

6. The computer-implemented method of claim 5, wherein
- said number of successive occurrences is comprised between a minimum number and a maximum number of successive occurrences;
- the output tree comprises said maximum number of duplications, among which a number of duplications equal to the difference between the maximum number and the minimum number are indicated as optional (671c, 672c).

7. The computer-implemented method of claim 3, wherein:
- the input tree comprises a plurality of nodes representative of a start rule;
- said conversion comprises replacing said plurality of nodes by a single node representative of a start rule, having, for each start node of plurality of nodes representative of a start rule, a child representing the same rule as said start node.

8. The computer-implemented method of any one of the preceding claims, further comprising using (570) said ASR engine.

9. A computing system (300) comprising at least one processing logic (310) configured to execute a method according to any one of the preceding claims.

10. Computer program product comprising computer code instructions which, when the program is executed by a computer, cause the computer to carry out the steps of the method of claim 1 to 8.

## Patentansprüche

1. Rechnerimplementiertes Verfahren (500), das Folgendes umfasst:
- Erhalten (510) einer Eingabe-Grammatik zur automatischen Spracherkennung, ASR, in einem Eingabeformat von ASR-Grammatiken von einem Benutzer,
- Erhalten einer Auswahl (520) einer ASR-Funktionseinheit, die ASR-Grammatiken in einem Ausgabeformat von ASR-Grammatiken, das sich von dem Eingabeformat unterscheidet, verwendet,
- Syntaxanalysieren (530) der ASR-Grammatik in einem Eingabebaum (600a), wobei jeder Knoten des Baums einen Ausdruck, ein Schlüsselwort, eine Direktive, eine Anweisung oder ein Syntaxelement darstellt,
- Durchführen einer Umwandlung (540) des Eingabebaums in einen Ausgabebaum (600c), wobei die Umwandlung das Ersetzen von Knoten, die einen Ausdruck, ein Schlüsselwort, eine Direktive, eine Anweisung oder Syntaxelemente, die durch das Ausgabeformat nicht zugelassen sind, darstellen, durch einen äquivalenten Satz von Ausdruck, Schlüsselwort, Direktive, Anweisung oder Syntaxelementen, die durch das Ausgabeformat zugelassen sind, umfasst,
- Umwandeln (550) des Ausgabebaums in eine Ausgabe-ASR-Grammatik,
- Kompilieren (560) der Ausgabe-ASR-Grammatik für die ASR-Funktionseinheit.

2. Rechnerimplementiertes Verfahren nach Anspruch 1, wobei die Auswahl der ASR-Funktionseinheit durch den Benutzer durchgeführt wird.

3. Rechnerimplementiertes Verfahren nach einem der Ansprüche 1 oder 2, wobei die Umwandlung das Durchführen einer Durchquerung des Eingabebaums und, jedes Mal, wenn während einer Durchquerung ein Knoten, der einen Ausdruck, ein Schlüsselwort, eine Direktive, eine Anweisung oder ein Syntaxelement zum Umwandeln darstellt, gefunden wird, das Ersetzen des Knotens umfasst.

4. Rechnerimplementiertes Verfahren nach Anspruch 3, wobei:
- der Eingabebaum eine Ausspracheanweisung (630a) umfasst, die auf jeden Knoten anwendbar ist, der ein definiertes Wort (650a) darstellt,
- die Ausspracheanweisung durch das Ausgabeformat nicht zugelassen ist,
- die Umwandlung das Ersetzen der Ausspracheanweisung durch eine für jeden Knoten, der das definierte Wort (650c) darstellt, duplizierte Aussprachedirektive (630c) in dem Ausgabebaum umfasst.

5. Rechnerimplementiertes Verfahren nach Anspruch 3, wobei:
- der Eingabebaum einen Wiederholungsknoten (670a) umfasst, der ein Schlüsselwort darstellt, um eine Anzahl von aufeinanderfolgenden Vorkommen eines Ausdrucks, der durch einen Parameterteilbaum (600b) des Wiederholungsknotens definiert ist, zu erfassen,
- das Schlüsselwort, um eine Anzahl von aufeinanderfolgenden Vorkommen zu erfassen, durch das Ausgabeformat nicht zugelassen ist,
- die Umwandlung das Ersetzen des Wiederholungsknotens durch Duplizierungen (600b-1, 600b-2, 600b-3) des Parameterteilbaums für die Anzahl von aufeinanderfolgenden Vorkommen umfasst.

6. Rechnerimplementiertes Verfahren nach Anspruch 5, wobei
- die Anzahl von aufeinanderfolgenden Vorkommen zwischen einer minimalen Anzahl und einer maximalen Anzahl von aufeinanderfolgenden Vorkommen liegt,
- der Ausgabebaum die maximale Anzahl von Duplizierungen umfasst, unter denen eine Anzahl von Duplizierungen gleich der Differenz zwischen der maximalen Anzahl und der minimalen Anzahl als wahlweise angegeben wird (671c, 672c).

7. Rechnerimplementiertes Verfahren nach Anspruch 3, wobei:
- der Eingabebaum eine Vielzahl von für eine Startregel repräsentativen Knoten umfasst,
- die Umwandlung das Ersetzen der Vielzahl von Knoten durch einen einzelnen für eine Startregel repräsentativen Knoten umfasst, der, für jeden Startknoten von der Vielzahl von für eine Startregel repräsentativen Knoten, ein Kind aufweist, das dieselbe Regel wie der Startknoten darstellt.

8. Rechnerimplementiertes Verfahren nach einem der vorhergehenden Ansprüche, das ferner das Verwenden (570) der ASR-Funktionseinheit umfasst.

9. Rechensystem (300), das mindestens eine Verarbeitungslogik (310) umfasst, die dafür konfiguriert ist, ein Verfahren nach einem der vorhergehenden Ansprüche auszuführen.

10. Rechnerprogrammerzeugnis, das Rechnercodebefehle umfasst, die, wenn das Programm durch einen Rechner ausgeführt wird, veranlassen, dass der Rechner die Schritte des Verfahrens nach einem der Ansprüche 1 bis 8 vollzieht.

## Revendications

1. Procédé mis en œuvre par ordinateur (500), comprenant :
- l'obtention (510) d'un utilisateur d'une grammaire d'entrée de reconnaissance automatique de la parole, RAP, dans un format d'entrée de grammaires RAP ;
- l'obtention d'une sélection (520) d'un moteur RAP utilisant des grammaires RAP dans un format de sortie de grammaires RAP, différent du format d'entrée ;
- l'analyse syntaxique (530) de ladite grammaire RAP dans un arbre d'entrée (600a), chaque nœud de l'arbre représentant une expression, un mot-clé, une directive, une instruction ou un élément de syntaxe ;
- la réalisation d'une conversion (540) de l'arbre d'entrée en un arbre de sortie (600c), ladite conversion comprenant le remplacement de nœuds représentant une expression, un mot-clé, une directive, une instruction ou des éléments de syntaxe, qui ne sont pas autorisés par le format de sortie, par un ensemble équivalent d'une expression, d'un mot-clé, d'une directive, d'une instruction ou d'éléments de syntaxe autorisés par le format de sortie ;
- la conversion (550) dudit arbre de sortie en une grammaire RAP de sortie ;
- la compilation (560) de ladite grammaire RAP de sortie pour ledit moteur RAP.

2. Procédé mis en œuvre par ordinateur selon la revendication 1, dans lequel ladite sélection du moteur RAP est réalisé par l'utilisateur.

3. Procédé mis en œuvre par ordinateur selon l'une des revendications 1 ou 2, dans lequel ladite conversion comprend la réalisation d'un parcours de l'arbre d'entrée, et, à chaque fois qu'est trouvé au cours du parcours un nœud qui représente un mot-clé, une directive, une instruction ou un élément de syntaxe à convertir, le remplacement dudit nœud.

4. Procédé mis en œuvre par ordinateur selon la revendication 3, dans lequel :
- l'arbre d'entrée comprend une instruction de prononciation (630a) applicable à chaque nœud représentant un mot défini (650a) ;
- ladite instruction de prononciation n'est pas autorisée par le format de sortie ;
- ladite conversion comprend le remplacement dans l'arbre de sortie de ladite instruction de prononciation par une directive de prononciation (630c) dupliquée pour chaque nœud représentant ledit mot défini (650c).

5. Procédé mis en œuvre par ordinateur selon la revendication 3, dans lequel :
- l'arbre d'entrée comprend un nœud de répétition (670a) représentant un mot-clé pour détecter un nombre d'occurrences successives d'une expression définie par un sous-arbre de paramètres (600b) dudit nœud de répétition ;
- ledit mot-clé pour détecter un nombre d'occurrences successives n'est pas autorisé par le format de sortie ;
- ladite conversion comprend le remplacement dudit nœud de répétition par des duplications (600b-1, 600b-2, 600b-3) dudit sous-arbre de paramètres pour ledit nombre d'occurrences successives.

6. Procédé mis en œuvre par ordinateur selon la revendication 5, dans lequel
- ledit nombre d'occurrences successives est compris entre un nombre minimal et un nombre maximal d'occurrences successives ;
- l'arbre de sortie comprend ledit nombre maximal de duplications, parmi lesquelles un nombre de duplications égal à la différence entre le nombre maximal et le nombre minimal est indiqué comme facultatif (671c, 672c).

7. Procédé mis en œuvre par ordinateur selon la revendication 3, dans lequel :
- l'arbre d'entrée comprend une pluralité de nœuds représentatifs d'une règle de départ ;
- ladite conversion comprend le remplacement de ladite pluralité de nœuds par un seul nœud représentatif d'une règle de départ, ayant, pour chaque nœud de départ de la pluralité de nœuds représentatifs d'une règle de départ, un enfant représentant la même règle que ledit nœud de départ.

8. Procédé mis en œuvre par ordinateur selon l'une quelconque des revendications précédentes, comprenant en outre l'utilisation (570) dudit moteur RAP.

9. Système informatique (300), comprenant au moins une logique de traitement (310) configurée pour exécuter un procédé selon l'une quelconque des revendications précédentes.

10. Produit de programme informatique, comprenant des commandes de code informatique, qui, lors de l'exécution du programme par un ordinateur, amènent l'ordinateur à effectuer les étapes du procédé selon les revendications 1 à 8.
